# EUROPEAN PATENT APPLICATION

(11) **EP 4 095 825 A1**
(43) Date of publication of application: **30.11.2022**
(21) Application number: 20914894.9
(22) Date of filing: 03.11.2020
(51) Int. Cl.: G09B 23/28, G09B 23/34, G09B 23/36, B29C 64/00, B33Y 10/00

(54) **RAT BIOMODELS FOR TRAINING IN MEDICAL CRANIOTOMY TECHNIQUES**

(30) Priority: 22.01.2020 BR 102020001378
(71) Applicant: Fundação Oswaldo Cruz, 21045-900 Rio de Janeiro, RJ (BR)
(72) Inventor: DA SILVA, Klena, Sarges Marruaz, 24350-020 Niterói - RJ (BR); MARQUES, Valéria Cristina, Lopes, 25976-055 Teresópolis - RJ (BR); MULLER, Carlos Alberto, 20510-160 Rio de Janeiro - RJ (BR)
(74) Representative: Zacco Denmark A/S
(86) International application number: PCT/BR2020/050448
(87) International publication number: WO 2021/146786

(57) **Abstract**

The present invention relates to substitute guinea pig rat models for craniotomy training. In this scenario, the present invention provides a rat model for training in medical craniotomy techniques comprising a body (2) with four legs (21) and a tail (22), and a head (1), similar to those of a rat, wherein the body (2) and the head (1) are attachable (3), and wherein the head (1) comprises a rigid skull.(1), similar to those of a rat, wherein the body (2) and the head (1) are attachable (3), and wherein the head (1) comprises a rigid skull.

## Description

### FIELD OF INVENTION

The present invention relates to an animal simulator model. More specifically, the present invention relates to an animal simulator biomodel for technical capabilities of craniotomy in rats.

### BASIS OF THE INVENTION

The use of different animal species in research is a practice that has been adopted for centuries in science. However, laboratory animal science did not emerge as a professional field until the 1950s. In this sense, scientific studies have been using rodents as models due to their physiological and genetic characteristics that are close to those of humans.

The species *Rattus norvegicus,* in particular, is widely used in animal studies because of its adaptability and ability to survive in a wide variety of climates. The animal is still easy to manage and has great reproductive capacity, which is of great interest to science.

For this reason, the rat *(Rattus norvegicus*) is a laboratory animal that is widely used in research and practical classes in biomedical science courses, and is particularly widely used in experimental studies in neuroscience, as well as in training in surgical techniques, such as craniotomy.

Craniotomy is performed in restorative neurological surgical procedures and experimentally in studies of neurological diseases, injuries, tumors, aneurysm, fractures. In the procedure, using rats as guinea pigs, if the operator is not experienced, there is a great risk of causing damage to the animal's brain, causing irreversible damage or even death to the animal.

For this reason, the training of this technique in artificial models that imitate animal physiognomy is an artifice that should be encouraged in order to at least reduce the suffering to which these animals are subjected during experimental procedures.

This type of training is already a reality for the practice of oral substance administration, and venous blood sampling in animals. In these cases, an artificial replica (biomodel) of an animal is created, so that a technician can practice the techniques on a model before doing so on a real animal. However, substitute models for craniotomy training in rats are not yet known.

The company *Bioseblab,* for example, markets a product called "*Rat training simulator* - *BIO-RAT*"*,* available on its website
(https://www.bioseblab.com/en/experimental-models/583-rat-training-simulator.html), which is basically a model for learning the necessary handling skills and procedural competencies without the need to use a live animal.

The marketed model comprises skin with the texture of a real animal, a rotating head, a flexible body for handling, visible blood vessels from the animal's tail, a removable tail, and a blood reservoir. Thus, this model can be used satisfactorily to practice venous material collection techniques in rats.

A company *Erler-Zimmer*, at your site of
Internet(https://www.erler-zimmer.de/shop/en/veterinary/miscellaneous/10440/mim olette -lab-rat), markets the product *Mimolette Lab Rat* which is a mannequin created with features to end the practice of using live rats for training in endotracheal intubation, cardiac puncture, and saphenous vein blood collection.

*Braintree,* on the other hand, offers the *CurVet Rat Training Simulator* product on its website (https://www.braintreesci.com/prodinfo.asp ?number=CU RVET), which comprises realistic dermatological skin suitable for training in: injections by most conventional routes; microchip identification implantation; handling and restraint; oral administration; lateral tail veins ideal for blood sampling; intravenous administration; and insertion of a flexible catheter.

The article "Three-dimensional printing: review of application in medicine and hepatic surgery" (Yao, et al, 2016.) presents applications of 3D printing *(Three-dimensional printing* - 3DP) methods in the medical field, for example as an educational tool, training tool or as pre-operative planning. The paper shows examples of the application of 3DP for the production of models used for teaching purposes of anatomical structures, organs or tissues, realistically displayed using these models.

The article further highlights the study by Costello et al. that used 3DP to print a high-fidelity heart model and implemented it in the instruction of 29 medical students. Costello et al. found that students made significant improvement in knowledge acquisition and structural conceptualization with application of the models. According to the paper, this kind of innovative, simulation-based educational approach can create a new opportunity to stimulate students' interests in different areas.

Thus, the study, although not specifically aimed at a rat model for training surgical intervention practices, clearly shows the importance of this type of practice for science.

The article *"*Fracture Surface Analysis of 3D-Printed Tensile Specimens of Novel ABS-Based Materials" (Perez, A.R.T.; Roberson, D.A.; Wicker, R.B., 2014.), on the other hand, explores the effects of adding reinforcing materials on the mechanical properties of acrylonitrile-butadiene-styrene (ABS) in a
effort to create materials with improved physical properties for application in 3DP. According to the paper, two of the most commonly used materials for 3DP material extrusion are acrylonitrile-butadiene-styrene (ABS) and polylactic acid (PLA) due to their dimensional stability properties and low glass transition temperature.

From the above, it is clear that it is already widely recognized in the current state of the art that the use of biomodels for training procedures normally performed on live guinea pigs is a practice that should be endorsed.

With regard specifically to the use of rats as guinea pigs, the focus of the invention described herein, it is widely held that they should be spared some of the pain and injury caused by the mishandling of inexperienced technicians, sparing these animals at least a small part of the suffering to which they are subjected during various experiments.

However, nowadays, rat biomodels (artificial rats) are constructed from silicone and have realistic skin, trachea, stomach, and throat. Therefore, the current models are efficient only for practical procedures, such as dosing the animals orally with pipettes, venous injection into the tail, and insertion of feeding tubes into the throat.

Therefore, although the prior art already comprises rat biomodels that aim at training medical and surgical techniques, no rat biomodel has been identified that meets the specific objective that the present invention aims at, i.e., a rat biomodel that enables the training of medical craniotomy techniques.

As will be further detailed below, the present invention aims at solving the above-described prior art problems in a practical and efficient manner.

### SUMMARY OF THE INVENTION

The present invention has as an objective to provide a bio-model of rat for training in medical craniotomy techniques.

In order to achieve the objectives described above, the present invention provides a rat model for training in craniotomy techniques. It comprises a body with four legs and a tail, and a head, similar to those of a rat, in which the body and head are interconnectable, and in which the head comprises a rigid skull.

### BRIEF DESCRIPTION OF THE IMAGES

The detailed description presented below makes reference to the attached images and their respective reference numbers.
**Image 1** illustrates the rat biomodel of the present invention with the head and body highlighted.
**Image 2** illustrates a rough view of the rat biomodel of the invention with the head embedded in the body.
**Image 3** illustrates a rear view of the head of the rat biomodel of the invention.
**Image 4** illustrates a top view of the head of the rat biomodel of the invention.

### DETAILED DESCRIPTION OF THE INVENTION

Preliminarily, it is emphasized that the description that follows will start from a preferred embodiment of the invention. As will be evident to anyone skilled in the art, however, the invention is not limited to this particular realization.

As already described, the rat model of the present invention was developed to replace the rat in craniotomy training, providing refinement of technique by the researcher and consequent reduction in the number of rats for studies that need access to the brain.

**Image 1** illustrates the rat biomodel of the present invention with head 1 and body 2 highlighted. The fitting 3 of head 1 with the body 2 can be better observed in **Image 2.**

More broadly, the invention provides a rat model for training medical craniotomy techniques comprising a body 2 with four legs 21 and a tail 22, and a head 1, similar to those of a rat. The element of the invention that makes the biomodel unique, and amenable to application for training craniotomy techniques, is in the fact that the body 2 and head 1 are fitable 3, wherein the head 1 comprises a rigid skull.

Preferably, the body 2 of the biomodel is made of a more flexible material, such as silicone, where externally, the body 2 has a texture similar to that of a real rat body 2.

Optionally, the body 2 of the biomodel can be provided with elements (such as pharynx, larynx, trachea, stomach, and tail vein 22) that are anatomically similar to the real rat, and that allow the simulation of various procedures, such as dosing the animals orally with pipettes, venous injection into the tail 22, and insertion of feeding tubes into the throat. Thus, the biomodel could be used both for craniotomy and for training the other techniques highlighted.

**Images 3 and** 4 illustrate rear and top views of head 1 of the rat biomodel of the invention. In these images it can be seen that the rigid skull is filled with gelatinous material 10 (preferably red), with a texture similar to the animal's brain. Thus, the training experience becomes even more real with this optional configuration.

Preferably, the biomodel is manufactured by the 3D printing technique, which has proven to be very accurate and realistic for reproducing various objects. For modeling the 3D print can be used the software *Blender (Freeware*), where the model can be based on the structure of the skull of a taxidermied adult male rat.

In this optional configuration, the average skull measurements would be 4.5cm total length, 3.0cm jaw length, 1.2cm width and 2mm thickness. These measurements, however, may vary, so this does not represent a limitation to the scope of the invention.

Optionally, the rigid skull is manufactured using ABS (acrylonitrile butadiene styrene) monofilament, in ivory white color. The choice of this filament in concrete prototypes was based on the proximityof resistance with the bone material. Meanwhile, this feature is only optional, other materials can be used instead.

To allow the user to visualize the proximity of the brain during the incision, the 3D skull frame can be constructed in thickness similar to the thickness found in adult rat skulls. Such a thickness can be, for example, 0.5mm.

Additionally, the skull can be filled with gelatinous material 10 (PVA base, sodium borate and food coloring) simulating the brain. In this configuration, if the user, in his training, exceeds the intended limit with the technique used, the skull filling material leaks, indicating to the user that he would have perforated the animal's skull.

In order to provide a better finish and make the model more realistic, the eye can optionally be modeled with the same gel-like material that fills the model's skull (brain), and can be painted red.

In addition, the biomodel can comprise vibrissae made, for example, with white sewing thread and glued to the model's snout with white glue. Obviously, vibrissae can be manufactured in different ways, so this does not represent a limitation to the scope of the invention.

It is important to note that the separate making of head 1, allowing for fitting 3 and removing it, was designed to facilitate the exchange of heads 1 already used in the procedure, thus keeping body 2 reusable. In this way, after training and using the model skull, only head 1 should be replaced, so that body 2 can be reused countless times. Thus, the invention is extremely advantageous because it reduces the waste of material and capital that would represent the replacement of the model as a whole.

It should be noted that the form of fit 3 between body 2 and head 1 can vary, so any form of fit 3 can be adopted. It can also be adopted some locking element between these elements, such as screws, magnets, etc. Thus, the choice of fitting form 3 does not represent a limitation to the scope of the invention.

Also optionally, a configuration is provided in which the skull internally comprises a moldable hydrophobic semitransparent silicone film. This film would be useful to simulate the dura mater, which is the outermost of the three meninges surrounding a real brain.

Also optionally, configurations are provided in which *Strain Gauge* type sensors are connected to software for user monitoring of skull section depth, and force stress applied to the simulator during training. In this configuration, the user would be informed in real time if he is performing the practiced technique in the correct way, or if he should make any kind of adaptation (force/pressure, or depth).

Therefore, based on what is described in this report, the rat model of the present invention reaches its proposed goal of providing a substitute model for the use of an animal for training in the experimental phase of neuroscience projects that need to perform craniotomy, in an effective way.

The biomodel can be applied for training researchers and graduate students in learning craniotomy and presents itself as an alternative to the use of animals in the training of this procedure.

Optionally, the biomodels can be sold in kits comprising five heads 1 (or as many heads as deemed necessary) and a body 2 made of ABS material by 3D printing. In addition, the heads 1 can be marketed individually, reducing costs when purchasing these training tools.

Numerous variations affecting the scope of protection of the present application are permissible. Thus, it is reinforced that the present invention is not limited to the particular configurations/concretizations described above.

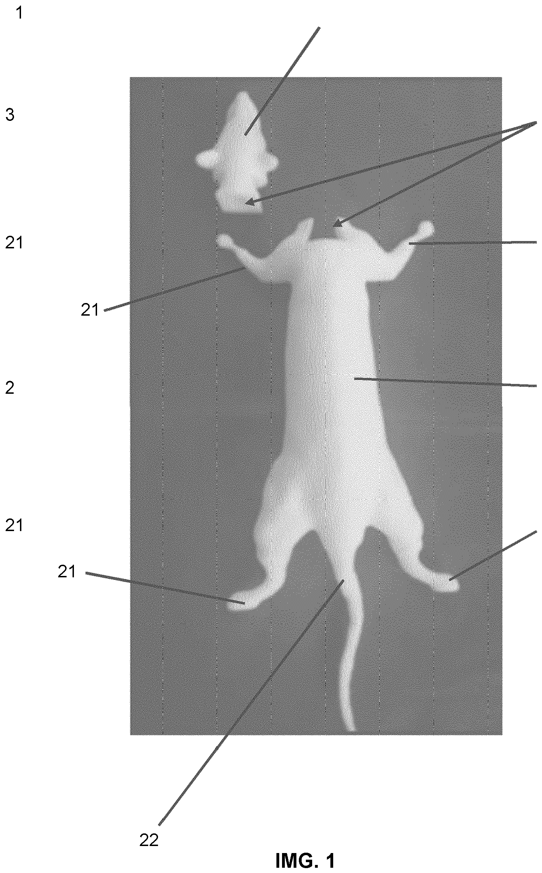

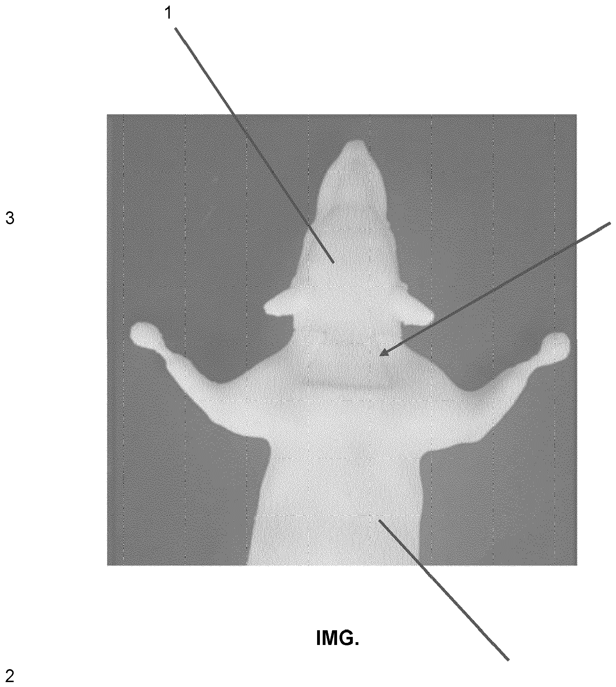

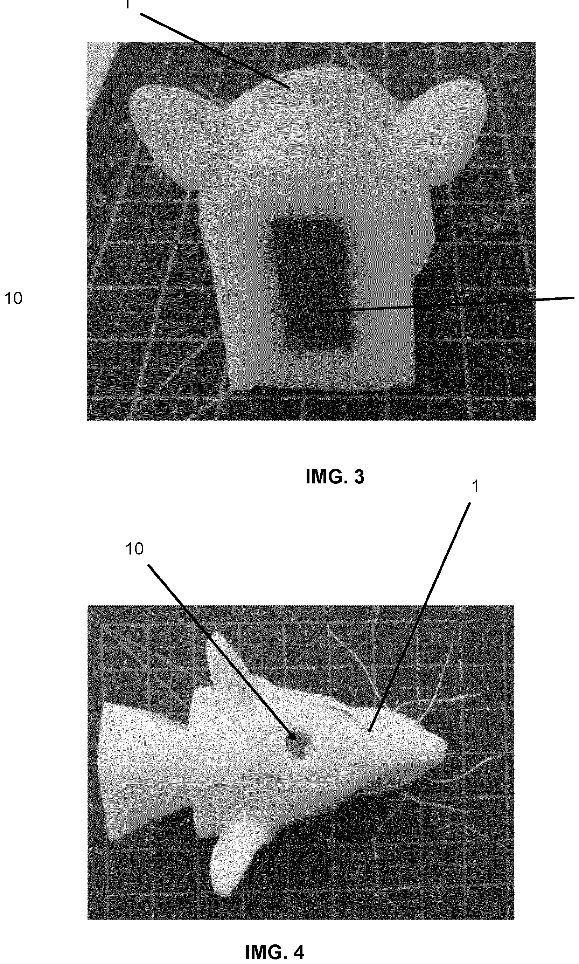

## Claims

1. A rat model for training medical craniotomy techniques comprising a body (2) with four legs (21) and a tail (22), and a head (1), similar to those of a mouse, **characterized by** the fact that the body (2) and the head (1) are attachable (3), where the head (1) comprises a rigid skull.

2. Rat biomodel according to claim 1, **characterized in that** the rigid skull is filled with reddish colored gelatinous material (10).

3. rat biomodel according to claim 1 or 2, **characterized in that** the biomodel is manufactured by the 3D printing technique.

4. rat biomodel according to any of claims 1 to 3, **characterized in that** the rigid skull is manufactured using ABS monofilament in ivory white color.

5. rat biomodel according to any of claims 1 to 4, **characterized in that** the body (2) of the biomodel is manufactured from silicone, and is provided with elements such as pharynx, larynx, trachea, stomach, and tail vein (22) anatomically similar to a real rat.

6. rat biomodel according to any one of claims 1 to 5, **characterized in that** the skull internally comprises a semitransparent hydrophobic moldable silicone film.

7. rat biomodel according to any of claims 1 to 6, **characterized in that** it comprises *Strain Gauge* type sensors adapted to measure the depth of the skull section, and the force stress applied skull.
